# EUROPÄISCHE PATENTANMELDUNG

(11) **EP 2 072 776 A2**
(43) Veröffentlichungstag der Anmeldung: **24.06.2009**
(21) Anmeldenummer: 08018277.7
(22) Anmeldetag: 18.10.2008
(51) Int. Cl.: F01P 3/18, B60K 11/04

(54) **Wärmeübertragungsanordnung für ein Fahrzeug**

(30) Priorität: 22.12.2007 DE 102007062346
(71) Anmelder: Dr.Ing. H.C. F. Porsche Aktiengesellschaft, 70435 Stuttgart (DE)
(72) Erfinder: Schneider, Klaus, 75233 Tiefenbronn (DE)

(57) **Zusammenfassung**

Die vorliegende Erfindung betrifft eine Wärmeübertrageranordnung für ein Frontend eines Fahrzeugs, mit einem stehend angeordneten und von vorn nach hinten mit Luft durchströmbaren Hauptwärmeübertrager, mit einem Zusatzwärmeübertrager.

Eine besonders kompakte Bauform ergibt sich, wenn der Zusatzwärmeübertrager liegend angeordnet ist und von unten nach oben mit Luft durchströmbar ist.

## Beschreibung

Die vorliegende Erfindung betrifft eine Wärmeübertrageranordnung für ein Frontend eines Kraftfahrzeugs, mit den Merkmalen des Oberbegriffs des Anspruchs 1. Die Erfindung betrifft außerdem ein mit einer derartigen Wärmeübertrageranordnung ausgestattetes Kraftfahrzeug.

Aus der DE 33 44 88 ist eine Wärmeübertrageranordnung bekannt, die einen Hauptwärmeübertrager und einen Zusatzwärmeübertrager aufweist, die beide stehend angeordnet und von vorn nach hinten mit Luft durchströmbar sind. Dabei ist der Zusatzwärmeübertrager hinter dem Hauptwärmeübertrager angeordnet.

Aus der DE 33 44 220 C2 ist eine Wärmeübertrageranordnung bekannt, die ebenfalls einen Hauptwärmeübertrager und einen Zusatzwärmeübertrager aufweist, die beide stehend angeordnet und von vorn nach hinten mit Luft durchströmbar sind. Bei dieser Wärmeübertrageranordnung ist der Zusatzwärmeübertrager unten am Hauptwärmeübertrager angeordnet und zwar in der gleichen Ebene.

Auch die DE 10 22 105 zeigt eine Wärmeübertrageranordnung mit zwei stehend angeordneten und von vorn nach hinten mit Luft durchströmbaren Wärmeübertragern, die in der gleichen Ebene nebeneinander oder übereinander angeordnet sind.

Zwei in der gleichen Ebene nebeneinander stehend angeordnete Wärmeübertrager gehen auch aus der DE 102 33 859 A1 hervor.

Die DE 198 49 619 A1 zeigt zwei stehend und hintereinander angeordnete Wärmeübertrager.

Um eine Wärmeübertrageranordnung für unterschiedliche Fahrzeugtypen möglichst einfach an unterschiedliche Kühlleistungen anpassen zu können, ist es grundsätzlich möglich, die Wärmeübertrageranordnung in einer Basisausführung nur mit dem Hauptwärmeübertrager auszustatten. Für eine Variante, die eine höhere Kühlleistung ermöglicht, kann dann zusätzlich ein Zusatzwärmeübertrager vorgesehen sein, der auf geeignete Weise anzuordnen ist. Dies kann jedoch für Fahrzeuge, insbesondere Sportfahrzeuge, problematisch sein, wenn am Frontend des jeweiligen Fahrzeug vergleichsweise wenig Einbauraum zur Verfügung steht.

Die vorliegende Erfindung beschäftigt sich mit dem Problem, für eine Wärmeübertrageranordnung der eingangs genannten Art eine verbesserte Ausführungsform anzugeben, die sich insbesondere dadurch charakterisiert, dass sie vergleichsweise wenig Bauraum benötigt.

Dieses Problem wird erfindungsgemäß durch die Gegenstände der unabhängigen Ansprüche gelöst. Vorteilhaften Ausführungsformen sind Gegenstand der abhängigen Ansprüche.

Die Erfindung beruht auf dem allgemeinen Gedanken, den Zusatzwärmeübertrager innerhalb der Wärmeübertrageranordnung liegend anzuordnen, so dass er im Betrieb von unten nach oben mit Luft durchströmbar ist. Durch die liegende Anordnung benötigt der Zusatzwärmeübertrager in vertikaler Richtung nur wenig Einbauraum. Gleichzeitig kann er bei entsprechender Anordnung auch in horizontaler Richtung so dimensioniert werden, dass er horizontal nicht oder nur geringfügig über eine Zarge, gegebenenfalls mit Lüfter, des Hauptwärmeübertragers vorsteht. Die vorgeschlagene Anordnung des Zusatzwärmeübertragers ermöglicht somit einen besonders kompakten und raumsparenden Aufbau für die Wärmeübertrageranordnung.

Besonders vorteilhaft ist eine Ausführungsform, bei welcher der Zusatzwärmeübertrager hinten am Hauptwärmeübertrager angeordnet ist. Zusätzlich oder alternativ kann der Zusatzwärmeübertrager unten am Hauptwärmeübertrager angeordnet sein. Insbesondere die Anordnung hinten unten beeinflusst die Einbausituation im Fahrzeug nur geringfügig, wenn anstelle einer Wärmeübertrageranordnung, die nur den Hauptwärmeübertrager aufweist, die hier vorgeschlagene Wärmeübertrageranordnung montiert wird, die den Hauptwärmeübertrager und den Zusatzwärmeübertrager umfasst.

Besonders vorteilhaft ist eine Ausführungsform, bei welcher der Hauptwärmeübertrager und der Zusatzwärmeübertrager an einer gemeinsamen Zarge befestigt sind. Diese kann insbesondere die Anbindung der Wärmeübertrageranordnung am Fahrzeug realisieren. Zusätzliche Befestigungsmaßnahmen für den Zusatzwärmeübertrager sind dabei nicht erforderlich.

Eine vorteilhafte Weiterbildung ergibt sich, wenn die Zarge einen gemeinsamen Abluftraum für beide Wärmeübertrager bildet. Hierdurch kann ein gegebenenfalls, insbesondere fahrzeugseitig, bereits vorhandener Abluftpfad genutzt werden, ohne dass bauliche Anpassungen erforderlich sind.

Gemäß einer weiteren Ausführungsform kann die Zarge zumindest einen Lüfter aufweisen, der die Luft aus dem gemeinsamen Abluftraum herausfördert. Somit kann zur Leistungssteigerung des Kühlkreises eine Luftströmung auch durch den Zusatzwärmeträger aktiv verstärkt werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine Ansicht von vorn einer Wärmeübertrageranordnung,
- Fig. 2: eine Ansicht von hinten der Wärmeübertrageranordnung,
- Fig. 3: eine Seitenansicht der Wärmeübertrageranordnung,
- Fig. 4: eine isometrische Ansicht der Wärmeübertrageranordnung.

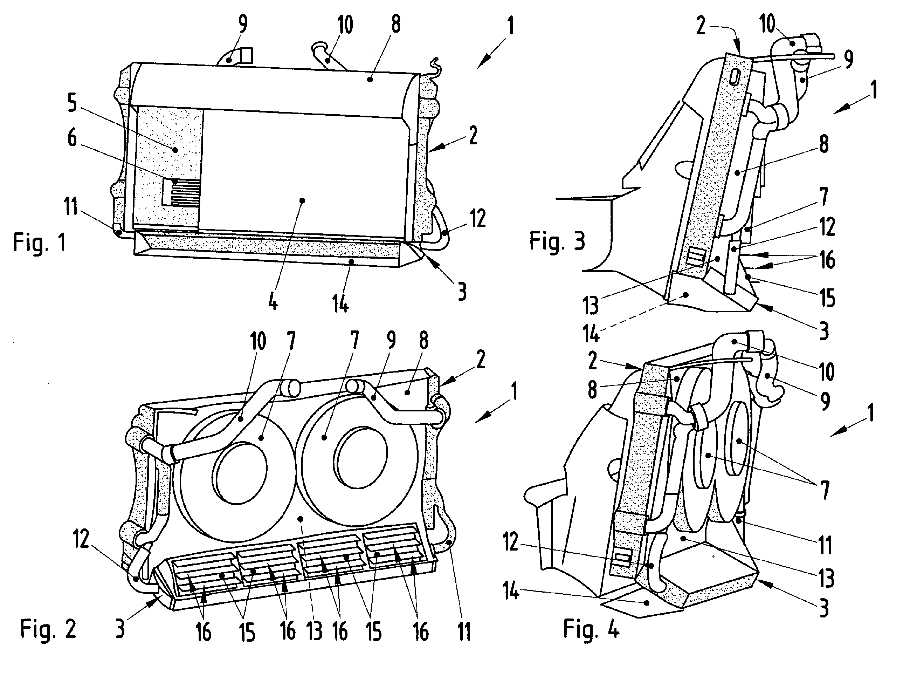

Entsprechend den Fig. 1 bis 4 weist eine für die Montage in einem hier nicht gezeigten Frontend eines ebenfalls nicht gezeigten Fahrzeugs vorgesehene Wärmeübertrageranordnung 1 einen Hauptwärmeübertrager 2 und einen Zusatzwärmeübertrager 3 auf. Der Hauptwärmeübertrager 2 ist im Einbauzustand der Wärmeübertrageranordnung 1 stehend angeordnet, so dass er im Betrieb von vorn nach hinten mit Luft durchströmbar ist. Die Begriffe "vorn" und "hinten" beziehen sich auf eine Fahrzeuglängsrichtung bei Vorwärtsfahrt im Einbauzustand der Wärmeübertrageranordnung 1. Die "stehende Anordnung" bedeutet, dass eine Ebene, in welcher sich der Hauptwärmeübertrager 2 erstreckt, um mehr als 45°, insbesondere um mehr als 60° oder 75°, gegenüber der Fahrzeuglängsrichtung geneigt ist. Im Unterschied dazu ist der Zusatzwärmeübertrager 3 liegend angeordnet, so dass er von unten nach oben mit Luft durchströmbar ist. Die Begriffe "unten" und "oben" beziehen sich auf die tatsächliche Position im ordnungsgemäßen Einbauzustand. Die "liegende Anordnung" bedeutet, dass eine Ebene, in welcher sich der Zusatzwärmeübertrager 3 im wesentlichen erstreckt, gegenüber der Fahrzeuglängsrichtung um weniger als 45°, insbesondere um weniger als 30° oder 15°, geneigt ist.

Gemäß Fig. 1 kann der Hauptwärmeübertrager 2 einen Schichtaufbau mit mehreren Komponenten bilden. Beispielsweise können ein Kondensator 4 und zumindest ein weiterer Kühler 5 beziehungsweise 6 vorgesehen sein.

Entsprechend den Fig. 1 bis 4 ist der Zusatzwärmeübertrager 3 bei der hier gezeigten bevorzugten Ausführungsform hinten und unten am Hauptwärmeübertrager 2 angeordnet. Hierdurch wird der für die Wärmeübertrageranordnung 1 erforderliche Bauraum nach unten und/oder nach hinten nicht oder nur geringfügig vergrößert. Insbesondere steht der Zusatzwärmeübertrager 3 gemäß Fig. 3 nach hinten nicht oder nur geringfügig über einen Lüfter 7 nach hinten vor, der an einer Zarge 8 der Wärmeübertrageranordnung 1 angeordnet ist. Entsprechend den Fig. 2 und 4 sind im gezeigten Beispiel zwei Lüfter 7 an der Zarge 8 angebracht. Bei einer anderen Ausführung kann ein einzelner Lüfter 7 ausreichen.

Gemäß Fig. 2 weist der Hauptwärmeübertrager 2 einen Vorlaufanschluss 9 und einen Rücklaufanschluss 10 auf, mit denen der Hauptwärmeübertrager 2 im Einbauzustand der Wärmeübertrageranordnung 1 an einen Kühlkreis des Fahrzeugs anschließbar ist. Der Zusatzwärmeübertrager 3 ist über eine Vorlaufleitung 11 an den Vorlaufanschluss 9 des Hauptwärmeübertragers 2 und über eine Rücklaufleitung 12 an den Rücklaufanschluss 10 des Hauptwärmeübertragers 2 angeschlossen. Insofern bilden die Anschlüsse 9, 10 des Hauptwärmeübertragers 2 gemeinsame Anschlüsse für die gesamte Wärmeübertrageranordnung 1.

An der Zarge 8 sind der Hauptwärmeübertrager 2 und der Zusatzwärmeübertrager 3 gemeinsam befestigt. Dabei dient die Zarge 8 zum einen für die gemeinsame, einheitliche Montage der Wärmeübertrageranordnung 1 am Fahrzeug. Zum anderen sind an der Zarge 8 der oder die Lüfter 7 montiert. Ferner bildet die Zarge 8 zweckmäßig einen gemeinsamen Abluftraum 13 für die beiden Wärmeübertrager 2, 3. Der wenigstens eine Lüfter 7 ist dabei saugseitig an besagten Abluftraum 13 angeschlossen, so dass er im Betrieb die Abluft sowohl vom Hauptwärmeübertrager 2 als auch vom Zusatzwärmeübertrager 3 abzieht und einem Abluftpfad des Fahrzeugs zuführt.

Entsprechend Fig. 1 kann, insbesondere an der Zarge 8, ein Zuluftschacht 14 vorgesehen sein, durch den frontseitig anströmende Zuluft dem Zusatzwärmeübertrager 3 zuführbar ist. Im Zuluftschacht 14 erfolgt eine Strömungsumlenkung, bei welcher die von vorn nach hinten strömende Zuluft nach oben durch den Zusatzwärmeübertrager 3 umgelenkt wird.

Entsprechend den Fig. 2 und 3 kann die Zarge 8 im Bereich des Zusatzwärmeübertragers 3 Abluftöffnungen 15 aufweisen, durch welche Abluft des Zusatzwärmeübertragers 3 und über den gemeinsamen Abluftraum 13 auch Abluft des Hauptwärmeübertragers 2 aus dem Abluftraum 13 unter Umgehung der Lüfter 7 austreten kann. Die Abluftöffnungen 15 sind hier mit Hilfe von Abluftklappen 16, die an der Zarge 8 angeordnet sind, steuerbar. Die Abluftklappen 16 können somit den durchströmbaren Querschnitt der Abluftöffnungen 15 mehr oder weniger verändern. Insbesondere können die Abluftklappen 16 die Abluftöffnungen 15 sperren und freigeben. Die Abluftklappen 16 können dabei als passiv arbeitende Abluftklappen 16 ausgestaltet sein, die insbesondere in ihre Schließstellung federbelastet vorgespannt sein können. Die passiven Abluftklappen 16 öffnen in Abhängigkeit des Staudrucks im gemeinsamen Abluftraum 13. Alternativ ist es ebenso möglich, die Abluftklappen 16 aktiv zu betreiben. Hierzu ist dann wenigstens ein hier nicht gezeigter Stellantrieb vorgesehen, der mit Hilfe einer geeigneten Steuerung betätigbar ist. Diese Steuerung kann die aktiven Abluftklappen 16 dann beispielsweise in Abhängigkeit der Fahrzeuggeschwindigkeit öffnen und/oder schließen.

## Patentansprüche

1. Wärmeübertrageranordnung für ein Frontend eines Fahrzeugs,
- mit einem stehend angeordneten und von vorn nach hinten mit Luft durchströmbaren Hauptwärmeübertrager (2),
- mit einem Zusatzwärmeübertrager (3),
**dadurch gekennzeichnet, dass** der Zusatzwärmeübertrager (3) liegend angeordnet ist und von unten nach oben mit Luft durchströmbar ist.

2. Wärmeübertrageranordnung nach Anspruch 1,
**dadurch gekennzeichnet, dass** der Zusatzwärmeübertrager (3) hinten am Hauptwärmeübertrager (2) angeordnet ist.

3. Wärmeübertrageranordnung nach Anspruch 1 oder 2,
**dadurch gekennzeichnet, dass** der Zusatzwärmeübertrager (3) unten am Hauptwärmeübertrager (2) angeordnet ist.

4. Wärmeübertrageranordnung nach einem der Ansprüche 1 bis 3,
**dadurch gekennzeichnet,**
- **dass** der Hauptwärmeübertrager (2) einen Vorlaufanschluss (9) und einen Rücklaufanschluss (10) aufweist, mit denen der Hauptwärmeübertrager (2) an einen Kühlkreis des Fahrzeugs anschließbar ist,
- **dass** der Zusatzwärmeübertrager (3) an den Vorlaufanschluss (9) und an den Rücklaufanschluss (10) des Hauptwärmeübertragers (2) angeschlossen ist.

5. Wärmeübertrageranordnung nach einem der Ansprüche 1 bis 4,
**dadurch gekennzeichnet, dass** der Hauptwärmeübertrager (2) und der Zusatzwärmeübertrager (3) an einer gemeinsamen Zarge (8) befestigt sind.

6. Wärmeübertrageranordnung nach Anspruch 5,
**dadurch gekennzeichnet, dass** die Zarge (8) einen gemeinsamen Abluftraum (13) für beide Wärmeübertrager (2, 3) bildet.

7. Wärmeübertrageranordnung nach Anspruch 6,
**dadurch gekennzeichnet, dass** die Zarge (8) zumindest einen Lüfter (7) aufweist, der die Luft aus dem Abluftraum (13) herausfördert.

8. Wärmeübertrageranordnung nach einem Ansprüche 5 bis 7,
**dadurch gekennzeichnet, dass** die Zarge (8) Abluftöffnungen (15) aufweist, die mit an der Zarge (8) angeordneten Abluftklappen (16) steuerbar sind.

9. Wärmeübertrageranordnung nach einem der Ansprüche 1 bis 8,
**dadurch gekennzeichnet, dass** ein Zuluftschacht (14) zum Zuführen von Zuluft zum Zusatzwärmeübertrager (3) vorgesehen ist.

10. Fahrzeug mit einem Frontend, das eine Wärmeübertrageranordnung (1) nach einem der Ansprüche 1 bis 9 aufweist.
